# EUROPEAN PATENT APPLICATION

(11) **EP 3 693 867 A1**
(43) Date of publication of application: **12.08.2020**
(21) Application number: 19155851.9
(22) Date of filing: 07.02.2019
(51) Int. Cl.: G06F 13/40

(54) **FIRST ELECTRONIC DEVICE, SECOND ELECTRONIC DEVICE, ELECTRONIC SYSTEM AND METHOD**

(71) Applicant: Vestel Elektronik Sanayi ve Ticaret A.S., 45030 Manisa (TR)
(72) Inventor: SARIARSLAN, Muhammet Kürsat, 45030 Manisa (TR)
(74) Representative: Kehl, Ascherl, Liebhoff & Ettmayr Patentanwälte Partnerschaft mbB

(57) **Abstract**

The present invention provides an electronic system (315), comprising at least one first electronic device (100, 300) according to the present invention, at least one second electronic device (205, 305) according to the present invention, and at least one cable (150, 250) comprising one cable connector (151, 252, 351, 352) on each end. Further, the present invention provides a respective first electronic device (100, 300), a respective second electronic device (205, 305) and a respective method.

## Description

### TECHNICAL FIELD

The invention relates to a first electronic device, a second electronic device, an electronic system and a method.

### BACKGROUND

Although applicable to any electronic system, the present invention will mainly be described in conjunction with multimedia systems.

Modern electronic installations, like e.g. network installations, may comprise a plurality of different devices that have to be interconnected via cables. Depending on the size of the installation and the number of devices in the installation, it may be difficult to correctly match cable ends, i.e. connectors, with the respective sockets of the devices of the respective installation.

To aid users in installing cables in an electronic installation document US 2012 / 0 256 005 A1 suggests providing RFID tags on the connectors of cables that may then be identified by the devices of the electronic installation. This however requires additional RFID tags and renders the cables more complex and expensive.

In document US 2012 / 0 079 137 A1 a system is proposed, where a central control apparatus identifies cables that are connected to ports of electronic devices and verifies if the cables are connected to the correct ports. This however requires an additional component in the system, the central control apparatus, and requires additional data connections between the control apparatus and the electronic devices.

Accordingly, there is a need for a simplified method for aiding users in performing cable connections between electronic devices.

### SUMMARY OF THE INVENTION

The present invention provides a first electronic device with the features of claim 1, a second electronic device with the features of claim 7, an electronic system with the features of claim 12, and a method with the features of claim 14.

### Accordingly, it is provided:

A first electronic device comprising a number of first sockets configured to couple to a cable connector, a connection detector configured to detect when a cable connector is plugged into one of the first sockets, and a signal emitter configured to emit a signal comprising information about the first socket into that the cable connector is plugged in.

### Further, it is provided:

A second electronic device comprising a number of second sockets configured to couple to a cable connector, a signal receiver configured to receive a signal comprising information about a cable connector that is to be connected to one of the second sockets, and an indicator configured to indicate the second socket to which the cable connector is to be connected based on the received information.

### In addition, it is provided:

An electronic system comprising at least one first electronic device according to the present invention, at least one second electronic device according to the present invention, and at least one cable comprising one cable connector on each end.

### Finally, it is provided:

A method for providing connection information to a user about cable connectors of cables that are to be connected between a first electronic device and a second electronic device, the method comprising detecting the connection of a first cable connector to a first socket of the first electronic device, emitting a signal comprising information about the first socket into that the first cable connector is plugged in with the first electronic device, receiving the signal in the second electronic device, and indicating with the second electronic device to a user a second socket to which the cable connector is to be connected based on the information in the received signal.

The present invention is based on the finding that in many applications a plurality of cables need to be installed between different devices.

For example in computer network installations comprising switches, patch panels and the like, an administrator needs to install a plurality of network cables. Usually specialized personal will perform the installation of such equipment and will not face too many difficulties installing the cables.

However, in applications like e.g. home theatre installations or multimedia installations, usually non-expert users will try to perform the installation. The present invention may therefore especially be applied to such installations, where a plurality of different cables have to be installed by non-expert users. It is however understood, that the present invention is not limited to such applications.

A multimedia installation may comprise a plurality of different components, like signal sources and signal receivers or consumers. The signal sources may e.g. provide video and audio signals, and the signal receivers may e.g. consume the signals for reproduction to users. Devices like receivers may be signal providers and signal consumers at the same time.

To aid unexperienced users when installing cables e.g. in a multimedia installation comprising at least one first device and at least one second device, the present invention provides an indication to the user regarding the correct sockets for a cable.

To this end, a first electronic device comprises a number of first sockets. Such sockets may e.g. comprise RCA sockets, HDMI sockets, optical sockets, or any other type of socket for connection of electrical or optical cables. Further, such a first electronic device comprises a connection detector that detects when a cable is connected to one of the first sockets. In addition, a signal emitter will then emit a signal comprising information about the first socket to which the cable connector is connected. This signal may e.g. be an electrical signal emitted via a network or wirelessly or an optical signal that is optically transmitted e.g. via optical cables or over the air.

In the first electronic device the connection detector may comprise contact based connection detectors, like e.g. two electrodes that are bridged by the cable connector that is plugged into a first socket, or contact-less connection detectors, like e.g. hall based sensors or the like. It is understood, that the connection detector individually monitors the single first sockets. The connection detector may comprise a logic that performs the monitoring and provides a respective digital signal. As alternative, the connection detector may e.g. provide connection signals from the single first sockets.

In the second electronic device a signal receiver will receive the emitted signal for further processing. The second electronic device may be any device that comprises a second socket that may receive the other end of the cable that is been connected to the first socket mentioned above. In the second electronic device an indicator will then indicate which one of the second sockets may receive the connector on the loose end of said cable.

It is understood, that in this context the term socket may refer to male sockets and to female sockets as well. It is further understood, that one electronic device may be a first electronic device in one case and may be a second electronic device in another case. Usually, the device to which the cable is connected first, will be the first electronic device, independently of the function of the respective electronic device.

With the present invention a user will directly perceive, which second socket is the correct socket for connecting the second electronic device to the first electronic device.

The present invention therefore provides a user with a simple yet very effective aid in installing e.g. multimedia equipment.

Further embodiments of the present invention are subject of the further subclaims and of the following description, referring to the drawings.

In an embodiment, the first electronic device may comprise a control unit coupled to the connection detector and the transmitter and configured to provide the information about the first socket into that the cable connector is plugged in to the transmitter.

The control unit may e.g. comprise a microcontroller or a processing unit of the first electronic device. The control unit may e.g. be coupled to the connection detector such that it may exactly determine to which one of the first sockets a cable is connected. It is understood, that the control unit may e.g. perform the digital signal processing for the signal that is then emitted by the signal emitter, i.e. a communication controller may be implemented in the control unit. As alternative, the signal emitter may comprise an integrated communication controller and the control unit may be coupled to the signal emitter via a digital interface.

In another embodiment, the control unit may comprise a database that comprises for every one of the first sockets the respective information that is provided to the signal emitter.

The term database in this context refers to any type of data storage in the control unit that may provide the respective data. The database may e.g. comprise a record for every one of the first sockets or for groups of sockets. Such a record may e.g. comprise information about the type of socket, the type of signal that may be provided by the socket, and maybe electrical parameters of the socket, the type of device that may be connected to the socket and so on.

The control unit may provide the complete record to the signal emitter for emission. As alternative, the control unit may filter or process the record and provide respective information to the signal emitter. The control unit may for example determine from the record which types of devices, e.g. video sinks with HDMI connectors, may be connected to the respective first socket and provide this information to the signal emitter.

In a further embodiment, the control unit may be configured to include additional information about the device to be coupled to the respective first socket in the information that is provided to the signal emitter.

The first electronic device may e.g. be a receiver with multiple first sockets of the same type. A modern home cinema receiver may e.g. comprise a plurality of HDMI output sockets for connecting different video display devices to the receiver and may at the same time comprise a plurality of HDMI input sockets for connecting different video sources to the receiver.

The control unit may therefore add additional information to the signal that is emitted. That information may e.g. specify if the respective first socket is an input or an output socket. This allows the devices that receive the emitted signal to determine if the respective connection is relevant for the respective device or not.

If for example the control unit determines that a HDMI cable is plugged into an output port of the first electronic device, the control unit may add this information to the signal. The receiving second electronic devices may then determine whether to show the information to the user or not based on whether the respective second electronic device is a video source or a video sink. In the case of the first socket being an output port only video sinks may therefore indicate to the user the respective second sockets.

If multiple second electronic devices are video sinks, all those second electronic devices may show the respective information. The user may then simply connect the HDMI cable to the second electronic device of his own choosing that shows the indication.

If the first sockets of the first electronic device are intended for specific devices, like e.g. a HDMI input on a receiver being intended for connection of a DVD- or Blue-ray player and another HDMI input being intended for connection of a gaming console, this information may also be provided in the signal and may be evaluated by the receiving second electronic devices.

This means that in case a HDMI cable is plugged into a HDMI socket of the first electronic device that is intended for connection of a DVD player, only the DVD player may show the indication as reaction to receiving the signal from the signal emitter.

It is understood, that an HDMI cable is used above just as an example and that any other type of cable or devices may be used with the additional information.

In an embodiment, the signal emitter may comprise a WLAN emitter and/or a Bluetooth emitter and/or a ZigBee emitter.

As indicated above, the signal emitter may provide the signal as wired or wireless electrical or optical signal. The use of a wireless signal transmission via e.g. WLAN, Bluetooth, ZigBee or any other wireless communication system however simplifies the installation of the electronic system.

The signal emitter may especially be configured to emit a broadcast type signal that may be received by other devices without prior pairing or coupling.

In another embodiment, the signal emitter may be configured to stop emitting the signal when a counterpart cable connector to the cable connector that is plugged into one of the first sockets is plugged into another socket.

The signal emitter may continuously, i.e. permanently or in predetermined intervals, emit the signal with information about the first socket into that the cable connector is plugged in. However, as soon as the other end of the cable is plugged into a second socket, the signal emitter may stop emitting the signal.

The first electronic device may be capable of detecting that the other end of the cable is connected to a second electronic device. To this end, the first electronic device may e.g. comprise respective sensors. Such sensors may e.g. comprise voltage sensors or may be integrated into transceiver elements that provide data communication via the respective cable.

As alternative, the information that the other end of the cable is connected to a second electronic device may also be provided from the respective second electronic device to the first electronic device.

In a further embodiment, the indicator may comprise a display device and/or an indicator lamp and/or a speaker device.

The second electronic device may be a device with a display and may therefore provide an image-based indication to a user. The image-based indication may e.g. comprise an image of the respective section of a housing of the second electronic device that houses the second sockets. The correct socket may in addition be highlighted in the image, e.g. by increasing the brightness, providing a visual marker like an arrow or a frame, or the like.

In case that the second electronic device does not comprise any display, indicator lamps, like e.g. LEDs, may be provided at the single second sockets. In addition, the second electronic device may also comprise a speaker device that may be used to provide an audio indication. Such an audio indication may e.g. comprise spoken words that explain the position of the respective second socket.

In an embodiment, if more than one of the second sockets are capable of receiving the cable connector, the indicator may indicate all capable second sockets.

The second electronic device may e.g. comprise a plurality of input or output sockets of one type. For example, a TV set may comprise a plurality of HDMI input sockets, or a receiver may comprise a plurality of HDMI output sockets or speaker output sockets. In case that such a second electronic device receives a signal with information about the first socket into that the cable connector is plugged in, it may indicate all adequate second sockets to the user.

If the second electronic device comprises more than one adequate second socket, the indicator may only indicate the first or first free one of the second sockets.

In another embodiment, the signal receiver may comprise a WLAN receiver and/or a Bluetooth receiver and/or a ZigBee receiver.

In a further embodiment, the second electronic device may comprise a signal transmitter, wherein the signal transmitter may be configured to emit a connection signal after a cable connector is plugged into one of the second sockets, especially a connection signal comprising information about the second socket into that the cable connector is plugged into.

The signal transmitter in the second electronic device serves for providing a feedback to the first electronic device. The signal transmitter will provide a connection signal that indicates to the first electronic device that the connector is plugged into a second socket of the second electronic device. The first electronic device will therefore know that the cable is connected and may stop emitting the signal with the information about the first socket into that the cable connector is plugged in.

It is understood, that the first electronic device and the second electronic device may both comprise transceiver elements that are capable of emitting and receiving signals.

In an embodiment, the first electronic device may comprise a signal provider, especially a set-top box or a DVD player or a Blu-ray player or a receiver, and the second electronic device may comprise a signal receiver, especially a TV set or a video beamer or a receiver. As alternative, the first electronic device may comprise a signal receiver, especially a TV set or a video beamer or a receiver, and the second electronic device may comprise a signal provider, especially a set-top box or a DVD player or a Blu-ray player or a receiver.

As indicated above, the present invention may be applied to signal providers or sources as first electronic devices and signal consumers or sinks as second electronic devices or vice versa, and especially to multimedia installations.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a first electronic device according to the present invention;
Fig. 2 shows a block diagram of an embodiment of a second electronic device according to the present invention;
Fig. 3 shows a block diagram of an embodiment of an electronic system according to the present invention; and
Fig. 4 shows a flow diagram of an embodiment of a method according to the present invention.

In the figures like reference signs denote like elements unless stated otherwise.

### DETAILED DESCRIPTION OF THE DRAWINGS

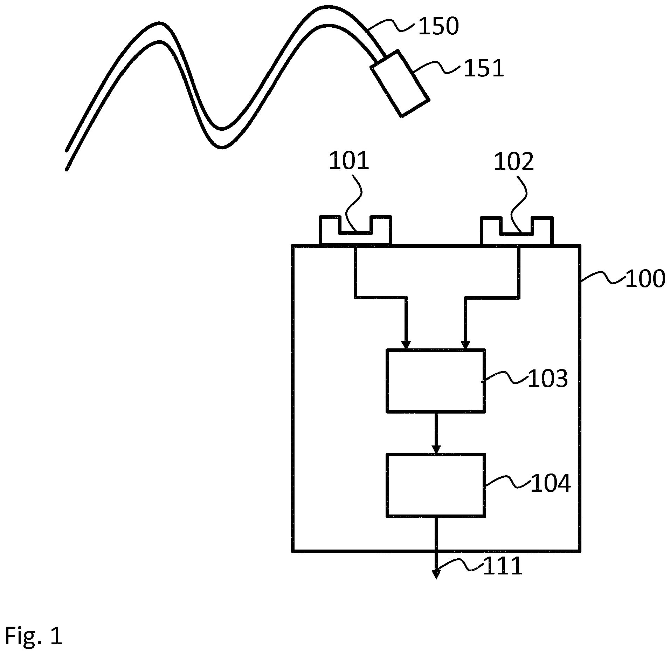

Fig. 1 shows a block diagram of an embodiment of a first electronic device 100. The first electronic device 100 comprises two first sockets 101, 102 that are connected to a connection detector 103, and a signal emitter 104 that is coupled to the connection detector 103. It is understood, that the number of two first sockets 101, 102 is just exemplarily chosen and that any other number of first sockets is possible. Fig. 1 further shows a cable 150 with a cable connector 151 that may be coupled to one of the first sockets 101, 102.

The connection detector 103 detects the connection of the cable connector 151 to one of the first sockets 101, 102 and provides a respective information to the signal emitter 104.

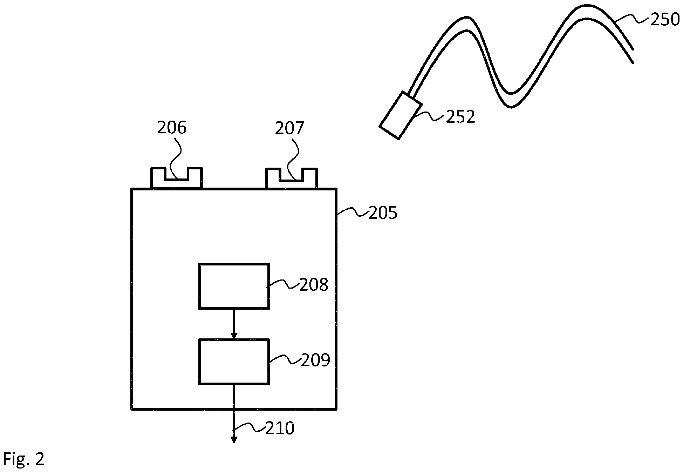

The signal emitter 104 in response to the cable connector 151 being connected to one of the first sockets 101, 102 emits a signal 111 comprising information about the first socket 101, 102 into that the cable connector 151 is plugged in. Such information may e.g. comprise information about the type of the respective first sockets 101, 102. In addition or as alternative, the information may refer to the type of device and/or socket that is expected to be connected to the other end of the cable 150. It is understood, that the information may comprise any information that allows a second electronic device (see Fig. 2) to determine if it comprises the respective connector.

The connection detector 103 may e.g. at least in part be integrated into a controller of the first electronic device 100. A possible partitioning would comprise electronic contacts or switches at the first sockets 101, 102 and an evaluation logic at such a controller. The controller would then provide the respective information to the signal emitter 104.

It is understood, that the signal emitter 104 may be a wired signal emitter, e.g. a network interface, or a wireless emitter 104, like e.g. a WLAN interface, a Bluetooth interface or the like. It is further understood, that the first electronic device 100, for example a controller of the first electronic device 100, may comprise a communication stack that together with the signal emitter 104 provides the communication capability via the respective communication system.

The first electronic device 100 may for example form part of a multimedia installation that a user may want to install in his home. Such an installation may comprise video and audio sources, hubs and consumers. Video and audio sources may e.g. comprise DVD- and Blue-ray players, gaming consoler, media players, set-top boxes and the like. Audio and video hubs may comprise home entertainment receivers, and audio and video consumers may comprise TV sets, video projectors and the like. It is understood, that hubs may be audio and video consumers and sources at the same time, since they may be arranged between an audio and video source and an audio and video consumer and forward audio and video signals from the source to the consumer.

Usually, the first electronic device 100 will be the device to which a cable 150 is connected first. It may however be specified, that only signal sources or hubs of an electronic system may be the first electronic devices 100. This implies that a user would be required to connect each cable 150 first to the respective signal source or hub and then to the other device.

Providing the functionality of the first electronic device 100 in a signal hub, like e.g. a home entertainment receiver, allows providing all other devices with only the functionality of the second electronic device 205 (see Fig. 2) as described above and below. Therefore, the overall system may be simplified. A user would then always connect a cable 150 first to the home entertainment receiver and then to the other devices.

Although not explicitly shown, it is understood, that the first sockets 101, 102 may also be connected to further components of the first electronic device 100, especially to the functional component that provides and/or receives the signals that are to be transmitted via the respective first socket 101, 102.

Fig. 2 shows a block diagram of an embodiment of a second electronic device 205. The second electronic device 205 comprises two second sockets 206, 207, a signal receiver 208, and an indicator 209. It is understood, that the two second sockets 206, 207 are just exemplarily shown and that any other number of second sockets 206, 207 may be provided in the second electronic device 205.

The second sockets 206, 207 are provided for coupling of the second electronic device 205 to a cable connector 252 of cable 250. It is understood, that the cable connector 252 may be provided on the opposite end of cable 250 as the cable connector 151 (see Fig. 1).

The signal receiver 208 receives the signal 111 (see Fig. 1) that comprises information about a cable connector 252 that is to be connected to one of the second sockets 206, 207. It is understood, that the information about the cable connector 252 may be provided indirectly by specifying to what type of second socket 206, 207 the cable connector 252 is to be connected or by specifying to what type of first socket 101, 102 the cable connector 252 is connected.

The indicator 209 then indicates for a user the second socket 206, 207 to which the cable connector 252 is to be connected based on the information in the received signal.

It is understood, that the above said about the signal emitter 104 also applies to the signal receiver 208. This means that the signal receiver 208 may be a wired signal receiver, e.g. a network interface, or a wireless receiver 208, like e.g. a WLAN interface, a Bluetooth interface or the like. It is further understood, that the second electronic device 205, for example a controller of the cable connector 252, may comprise a communication stack that together with the signal receiver 208 provides the communication capability via the respective communication system.

As explained above, the second electronic device 205 will usually be the device to which the cable 250 is connected after being already connected to the first electronic device 100.

It is understood, that electronic devices, like e.g. home theatre receivers or the like, may comprise the functionality of the first electronic device 100 and the second electronic device 205.

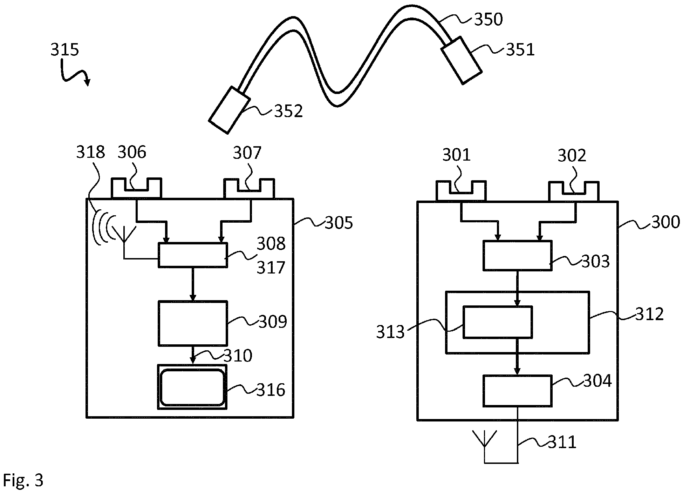

Fig. 3 shows a block diagram of an embodiment of an electronic system 315. The electronic system 315 comprises a first electronic device 300 and a second electronic device 305. Fig. 3 further shows a cable 350 with cable connectors 351, 352.

The first electronic device 300 is based on the first electronic device 100 and therefore also comprises two first sockets 301, 302 that are connected to a connection detector 303, and a signal emitter 304 that is coupled to the connection detector 303. It is understood, that the number of two first sockets 301, 302 is just exemplarily chosen and that any other number of first sockets is possible.

In addition to the elements of the first electronic device 100, the first electronic device 300 further comprises a control unit 312 with a database 313. The database 313 may be any type of data storage that holds information about the first sockets 301, 302 and/or the cables 350 that may be coupled to the first sockets 301, 302. The database 313 may for example be implemented as a data structure in a memory of the control unit 312.

The second electronic device 305 is based on the second electronic device 205 and therefore also comprises two second sockets 306, 307, a signal receiver 308, and an indicator 309. It is understood, that the two second sockets 306, 307 are just exemplarily shown and that any other number of second sockets 306, 307 may be provided in the second electronic device 305.

In addition, in the second electronic device 305 the signal receiver 308 at the same time is a signal transmitter 317 and may be called a transceiver. Further, the signal receiver 308 is coupled to the second sockets 306, 307. Further, the indicator 309 is coupled to a display device 316, e.g. a display of a TV set or the like.

In case that the signal receiver 308 receives the signal 311 from first electronic device 300, it will instruct the indicator 309 to shown on the display device 316 an indication, e.g. a picture of the section of the housing of the second electronic device 305 that comprises the second sockets 306, 307. The indication may highlight the respective one of the second sockets 306, 307, to which the cable connector 352 may be coupled.

The connection of the second sockets 306, 307 to the signal transmitter 317 serves for providing a connection signal 318 as soon as cable connector 352 is connected to one of the second sockets 306, 307. When the connection signal 318 is received by first electronic device 300, the first electronic device 300 may stop emitting the signal 311.

It may further be seen in the electronic system 315 that the communication between first electronic device 300 and second electronic device 305 is a wireless communication. It is understood, that this arrangement is just exemplarily shown, and that any other type of communication may also be used instead.

Further, if the second electronic device 305 does not comprise a display device 316 or in addition to the display device 316, it may comprise lamps, like LEDs, at the second sockets 306, 307 that may be lit up according to the information in the signal 311.

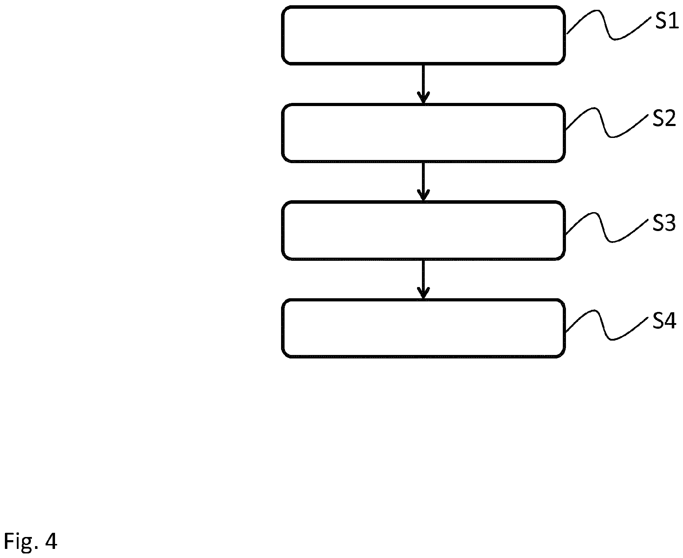

For sake of clarity in the following description of the method based Fig. 4 the reference signs used above in the description of apparatus based Figs. 1 - 3 will be maintained.

Fig. 4 shows a flow diagram of an embodiment of a method for providing connection information to a user about cable connectors 151, 252, 351, 352 of cables 150, 250 that are to be connected between a first electronic device 100, 300 and a second electronic device 205, 305.

The method comprises detecting S1 the connection of a first cable connector 151, 252, 351, 352 to a first socket 101, 102, 301, 302 of the first electronic device 100, 300, emitting S2 a signal 111, 311 comprising information about the first socket 101, 102, 301, 302 into that the first cable connector 151, 252, 351, 352 is plugged in with the first electronic device 100, 300, receiving S3 the signal 111, 311 in the second electronic device 205, 305, and indicating S4 with the second electronic device 205, 305 to a user a second socket 206, 207, 306, 307 to which the cable connector 151, 252, 351, 352 is to be connected based on the information in the received signal 111, 311.

The method may further comprise detecting connection of a cable connector 151, 252, 351, 352 to a second socket 206, 207, 306, 307 and transmitting a corresponding connection signal 318 from the second electronic device 205, 305 to the first electronic device 100, 300.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an electronic system 315, comprising at least on first electronic device 100, 300 according to the present invention, at least one second electronic device 205, 305 according to the present invention, and at least one cable 150, 250 comprising one cable connector 151, 252, 351, 352 on each end. Further, the present invention provides a respective first electronic device 100, 300, a respective second electronic device 205, 305 and a respective method.

### List of reference signs

- 100, 300: first electronic device
- 101, 102, 301, 302: first socket
- 103, 303: connection detector
- 104, 304: signal emitter
- 111, 311: signal
- 312: control unit
- 313: database
- 205, 305: second electronic device
- 206, 207, 306, 307: second socket
- 208, 308: signal receiver
- 209,309: indicator
- 210,310: indication signal
- 316: display device
- 317: signal transmitter
- 318: connection signal
- 315: electronic system
- 150,250: cable
- 151, 252, 351, 352: cable connector
- S1, S2, S3, S4: method steps

## Claims

1. First electronic device (100, 300) comprising:
a number of first sockets (101, 102, 301, 302) configured to couple to a cable connector (151, 252, 351, 352),
a connection detector (103, 303) configured to detect when a cable connector (151, 252, 351, 352) is plugged into one of the first sockets (101, 102, 301, 302), and
a signal emitter (104, 304) configured to emit a signal (111, 311) comprising information about the first socket (101, 102, 301, 302) into that the cable connector (151, 252, 351, 352) is plugged in.

2. First electronic device (100, 300) according to claim 1, comprising a control unit (312) coupled to the connection detector (103, 303) and the transmitter and configured to provide the information about the first socket (101, 102, 301, 302) into that the cable connector (151, 252, 351, 352) is plugged in to the transmitter.

3. First electronic device (100, 300) according to claim 2, wherein the control unit (312) comprises a database (313) that comprises for every one of the first sockets (101, 102, 301, 302) the respective information that is provided to the signal emitter (104, 304).

4. First electronic device (100, 300) according to any one of claims 2 and 3, wherein the control unit (312) is configured to include additional information about the device to be coupled to the respective first socket (101, 102, 301, 302) in the information that is provided to the signal emitter (104, 304).

5. First electronic device (100, 300) according to any one of the preceding claims, wherein the signal emitter (104, 304) comprises a WLAN emitter and/or a Bluetooth emitter and/or a ZigBee emitter.

6. First electronic device (100, 300) according to any one of the preceding claims, wherein the signal emitter (104, 304) is configured to stop emitting the signal (111, 311) when a counterpart cable connector (151, 252, 351, 352) to the cable connector (151, 252, 351, 352) that is plugged into one of the first sockets (101, 102, 301, 302) is plugged into another socket.

7. Second electronic device (205, 305) comprising:
a number of second sockets (206, 207, 306, 307) configured to couple to a cable connector (151, 252, 351, 352),
a signal receiver (208, 308) configured to receive a signal comprising information about a cable connector (151, 252, 351, 352) that is to be connected to one of the second sockets (206, 207, 306, 307), and
an indicator (209, 309) configured to indicate the second socket (206, 207, 306, 307) to which the cable connector (151, 252, 351, 352) is to be connected based on the received information.

8. Second electronic device (205, 305) according to claim 7, wherein the indicator (209, 309) comprises a display device (316) and/or an indicator lamp and/or a speaker device.

9. Second electronic device (205, 305) according to any one of the preceding claims 7 and 8, wherein if more than one of the second sockets (206, 207, 306, 307) are capable of receiving the cable connector (151, 252, 351, 352), the indicator (209, 309) indicates all capable second sockets (206, 207, 306, 307).

10. Second electronic device (205, 305) according to any one of the preceding claims 7 to 9, wherein the signal receiver (208, 308) comprises a WLAN receiver and/or a Bluetooth receiver and/or a ZigBee receiver.

11. Second electronic device (205, 305) according to any one of the preceding claims 7 to 10, comprising a signal transmitter (317), wherein the signal transmitter (317) is configured to emit a connection signal (318) after a cable connector (151, 252, 351, 352) is plugged into one of the second sockets (206, 207, 306, 307), especially a connection signal (318) comprising information about the second socket (206, 207, 306, 307) into that the cable connector (151, 252, 351, 352) is plugged into.

12. Electronic system (315), comprising
at least one first electronic device (100, 300) according to any one of claims 1 - 6,
at least one second electronic device (205, 305) according to any one of claims 7 - 11, and
at least one cable (150, 250) comprising one cable connector (151, 252, 351, 352) on each end.

13. Electronic system (315) according to claim 12, wherein the first electronic device (100, 300) comprises a signal provider, especially a set-top box or a DVD player or a Blu-ray player or a receiver, and wherein the second electronic device (205, 305) comprises a signal receiver (208, 308), especially a TV set or a video beamer or a receiver; or
wherein the first electronic device (100, 300) comprises a signal receiver (208, 308), especially a TV set or a video beamer or a receiver, and wherein the second electronic device (205, 305) comprises a signal provider, especially a set-top box or a DVD player or a Blu-ray player or a receiver.

14. Method for providing connection information to a user about cable connectors (151, 252, 351, 352) of cables (150, 250) that are to be connected between a first electronic device (100, 300) and a second electronic device (205, 305), the method comprising:
detecting (S1) the connection of a first cable connector (151, 252, 351, 352) to a first socket (101, 102, 301, 302) of the first electronic device (100, 300),
emitting (S2) a signal (111, 311) comprising information about the first socket (101, 102, 301, 302) into that the first cable connector (151, 252, 351, 352) is plugged in with the first electronic device (100, 300),
receiving (S3) the signal (111, 311) in the second electronic device (205, 305), and
indicating (S4) with the second electronic device (205, 305) to a user a second socket (206, 207, 306, 307) to which the cable connector (151, 252, 351, 352) is to be connected based on the information in the received signal (111, 311).

15. Method of claim 14, further comprising:
detecting connection of a cable connector (151, 252, 351, 352) to a second socket (206, 207, 306, 307) and transmitting a corresponding connection signal (318) from the second electronic device (205, 305) to the first electronic device (100, 300).
